# EUROPEAN PATENT APPLICATION

(11) **EP 4 732 940 A1**
(43) Date of publication of application: **29.04.2026**
(21) Application number: 24204591.2
(22) Date of filing: 04.10.2024
(51) Int. Cl.: B01J 3/00, C08F 6/00, C08F 2/00, C08F 210/16, C08F 6/10

(54) **PROCESS FOR PRODUCING A POLYOLEFIN WITH HIGHLY EFFICIENT RECYCLING OF 1-BUTENE**

(71) Applicant: Borealis GmbH, 1020 Vienna (AT)
(72) Inventor: BERGSTRA, Michiel, 3583 Beringen (BE); SLEIJSTER, Henry, 6161 Sittard Geleen (NL); ERIKSSON, Erik, 444 86 Stenungsund (SE); ZITTING, Samuli, 06850 Kulloo (FI)
(74) Representative: Maiwald GmbH

(57) **Abstract**

A process for the separation of at least one polyolefin from a product stream (a) from a solution polymerization process, wherein the product stream (a) comprises the at least one polyolefin and a mixture of volatiles, wherein the mixture of volatiles comprises at least one solvent, 1-butene, and at least one olefin other than 1-butene, the process comprising the steps of:
- separating in a first separation step at a temperature, preferably flash temperature, of lower than 250 °C and at a pressure of higher than 9 bar(a) the product stream (a) into a first 1-butene-rich vapor stream (b) and a first condensed polyolefin-rich stream (c);
- separating in a second separation step the first condensed polyolefin-rich stream (c) into a second 1-butene-rich vapor stream (b') and a second condensed polyolefin-rich stream (c');
- condensing in a first condensing step at least a part of the second 1-butene-rich vapor stream (b') into a condensed butene-lean recovery stream (b*) and a 1-butene-rich vapor recycle stream (b**);
characterized in that
the first 1-butene-rich vapor stream (b) and the 1-butene-rich vapor recycle stream (b**) are introduced into an initial feed stream (a') of the solution polymerization process without any further purification step.

## Description

### Technical Field of the Invention

The present invention is concerned with a process for separating a polyolefin from a product stream of a solution polymerization process of 1-butene and at least one olefin other than 1-butene. Furthermore, the present invention is concerned with a polyolefin obtainable from such a process.

### Background of the Invention

In polyolefin polymerization technology, in particular in polyolefin polymerization technology based on solution techniques, the downstream processing of the product stream is essential for producing a product with low volatiles content in view of solvent and/or unreacted (co)monomers and creating high monomer and comonomer yields to the produced polymer.

The downstream processing takes place via several separation steps, typically pressure flashing steps. Typically, these separation steps are repeated at least once to produce polyolefins with low volatile content. Each of these steps produces a polymer-rich phase and a polymer-lean phase, whereas the latter is typically reintroduced into the polymerization process after being subject to at least one purification step.

WO 2020/060745 A1 is directed towards the devolatilization of polymers. It discloses that the feed stream of the reactor is temperature adjusted, pressure adjusted and separated into a polymer-lean and a polymer-rich phase. The separator is generally described as a high-pressure liquid-liquid separator (HPS). The polymer-rich phase is then again temperature adjusted and fed into the second separator, which is a flash separator. WO 2020/060745 uses high pressure injection of volatiles into the second separator to lower the partial pressure of the volatiles composition in the polymer leading to facilitated flash separation. The polymer-rich phase of the second separator is then added to a devolatilization extruder as a final step. However, WO 2020/060745 does not provide any special teaching in view of facilitated returning of polymer-lean phases from such separation step into the feed stream of the polymerization process.

One of the major concerns in modern solution polymerization processes are energy efficiency and cost considerations. Hence it is a general desire in solution polymerization to prevent losses from the process, especially losses of monomer, comonomer and solvent. In the polymerization processes of the prior art, the overhead phase of each separation step ideally is returned to an initial feed stream of the solution polymerization process. However, in typical appliances of the process of the prior art the recycling overhead stream is purified before returning, further increasing energy consumption, complexity of the setup, and costs, while decreasing the efficiency of the overall process. Reason is that impurities introduced into the recycle streams may lead to reduction of catalyst activity in the reactor. Moreover, spontaneous polymerization of the mixture in such streams induced by such impurities after adjustment of the temperatures and the pressures to the requirements of the polymerization reaction may lead to fouling of the equipment. Finally, entrainment of polymer particles originated from the separation steps can result in fouling of downstream equipment, e.g. heat exchangers, in the recycle stream.

EP 4 137 521 A1 solves this problem by directly returning at least some of the remaining overhead streams of the separation steps to a feed stream of the solution polymerization process, i.e. without any further purification. However, the process described therein relates to a polymerization of ethylene with 1-octene as co-monomer.

WO 2017/108963 A1 describes a process for recovering hydrocarbons in a solution polymerization process primarily for a system, in which the comonomer is heavier than the solvent used. Thereby, the effluent stream from the polymerization reactor is separated in a first flash separator, wherein the vapor phase thereof is directly recovered to the polymerization reactor via a feed vessel, and wherein the liquid phase thereof is fed to a second flash separator, wherein at least 70 wt.-% of the vapor phase is recycled to the polymerization reactor via a feed vessel.

### Summary of the Invention

It is however, preferred that the process as described in the prior art could also be used for a solution polymerization of an olefin, such as ethylene, with 1-butene as co-monomer. The recovery concept as provided by the prior art cited above, however, has been developed for systems wherein the comonomer has a boiling temperature higher than the solvent generally used in such solution polymerization process. 1-Octene as used in this prior art has a higher boiling temperature than the solvent used therein. In such a situation, the process could not ensure anymore that impurities are sufficiently removed from the vapor phases returned to the polymerization reactor and/or that 1-butene is efficiently recycled.

It is therefore an object of the present invention to provide a process for the separation of at least one polyolefin produced from 1-butene and at least one olefin other than 1-butene from a product stream from a solution polymerization process thereby yielding a low volatiles containing polyolefin, wherein the process is more energy efficient, less complex, less prone to fouling, less costly than those known in the prior art, and applicable to systems, wherein 1-butene has a lower boiling point than the solvent used in the solution polymerization process.

Moreover, it is in particular an object of the present invention to produce in said process recycled solvent with low monomer and co-monomer concentration for flush purposes (without having a spontaneous reaction), whereby it is needed to remove water from the process, to remove oligomers, waxes, and/or heavy ends from the process, to purge any light components such as nitrogen from the process, and to purge iso-butenes from the process.

Commercially available 1-butene typically comprises iso-butene(s) and/or butane(s) in an amount in the range of from 0.05 to 1 wt.-%. It is therefore another object of the present invention to provide a process for the separation of at least one polyolefin, produced from 1-butene and at least one olefin other than 1-butene, from a product stream from a solution polymerization process having in particular low accumulation of iso-butene(s) or butane(s).

Moreover, it is another object of the present invention to provide a process for the separation of at least one polyolefin produced from at least one olefin and 1-butene, which is suitable for making the transition from production of 1-octene derived polymers to 1-butene derived polymers and *vice versa* without sending all process content to rundown vessels.

Finally, it is an objection of the present invention to provide a process for the separation of at least one polyolefin produced from at least one olefin and 1-butene producing a solvent flush stream low 1-butene content, especially for the flush on the reactor seal (and other critical pump seals) and preferable for use with the catalyst, activity boosters or activity retarders for controlling the activity of the catalyst.

This should be done with limited solvent losses, co-monomer and monomer losses at low energy consumption and low investment costs.

It has now surprisingly found that above-mentioned objects can be achieved by a process for the separation of at least one polyolefin from a product stream (a) from a solution polymerization process, wherein the product stream (a) comprises the at least one polyolefin and a mixture of volatiles, wherein the mixture of volatiles comprises at least one solvent, 1-butene and at least one olefin other than 1-butene, the process comprising the steps of:
- separating in a first separation step at a temperature, preferably flash temperature, of lower than 250 °C and at a pressure of higher than 9 bar(a) the product stream **(a)** into a first 1-butene-rich vapor stream **(b)** and a first condensed polyolefin-rich stream **(c);**
- separating in a second separation step the first condensed polyolefin-rich stream **(c)** into a second 1-butene-rich vapor stream **(b')** and a second condensed polyolefin-rich stream **(c');**
- condensing in a first condensing step at least a part of the second 1-butene-rich vapor stream **(b')** into a condensed butene-lean recovery stream **(b*)** and a 1-butene-rich vapor recycle stream **(b**);**
wherein the first 1-butene-rich vapor stream **(b)** and the 1-butene-rich vapor recycle stream **(b**)** are introduced into an initial feed stream **(a')** of the solution polymerization process without any further purification step.

The process of the present invention has the particular advantage that the recycling back to the polymerization vessel includes the majority of 1-butene, while the recovery section receives a significantly reduced amount of 1-butene, if at all.

### Short description of the Figures

Figure 1 shows a schematic overview of an embodiment of the system used in a process according to the present invention.
Figure 2 shows a schematic overview of a recovery unit usually used in the processes described in the prior art.
Figure 3 shows a schematic overview of a recovery unit used in the process according to the present invention.

### List of reference signs

- **1**: feed vessel
- **2**: reactor
- **3**: 1^{st} flash heater
- **4**: 1^{st} flash separator
- **5**: fractionation unit
- **6**: melt pump
- **7**: 2^{nd} flash heater
- **8**: 2^{nd} flash separator
- **9**: melt pump
- **10**: 3^{rd} flash heater
- **11**: 3^{rd} flash separator
- **12**: knock out pot
- **13**: condensation unit
- **20**: solvent and comonomer feed from recovery to feed vessel
- **21**: optional purge from feed vessel
- **22**: fresh monomer and comonomer feed
- **23**: stream with conditioning units for further feed preparation **(a')**
- **24**: reactor effluent
- **25**: stream to 1^{st} flash separator **(a)**
- **26**: vapor phase withdrawn from the 1^{st} flash separator **(b)**
- **27**: liquid phase withdrawn from the 1^{st} flash separator **(c)**
- **28**: recycle stream to feed vessel from 1^{st} flash separator
- **29**: pressurized liquid phase withdrawn from the 1^{st} flash separator
- **30**: feed to 2^{nd} flash separator **(c)**
- **31**: vapor phase withdrawn from the 2^{nd} flash separator **(b')**
- **32**: liquid phase withdrawn from the 2^{nd} flash separator **(c')**
- **33**: feed of vapor phase withdrawn from the 2^{nd} flash separator to condensation unit
- **34**: entrained polymer
- **35**: non-condensed part of vapor phase withdrawn from the 2^{nd} flash separator recycled to feed vessel **(b**)**
- **36**: condensed part of vapor phase withdrawn from the 2^{nd} flash separator recycled to recovery **(b*)**
- **37**: pressurized liquid phase withdrawn from the 2^{nd} flash separator
- **38**: feed to 3^{rd} flash separator
- **39**: vapor phase withdrawn from the 3^{rd} flash separator recycled to recovery **(b^{#})**
- **40**: product stream withdrawn from the 3^{rd} flash separator **(c^{#})**
- **41**: liquid discharge from the fractionation unit 5
- **C1**: first column of recovery unit
- **C2**: second column of recovery unit
- **2.1**: cooler
- **2.2**: two phase separator
- **2.3**: **(cross)** heat exchanger
- **C3**: third column of recovery unit
- **F1**: feed to recovery, from 2^{nd} flash separator and 3^{rd} flash separator
- **F2**: fresh make up solvent, either fed to the first column or the second column
- **P1**: recovered flush solvent
- **P2**: recovered recycle comonomer to feed vessel
- **B1**: bleed stream for heavy components
- **B2**: bleed of wastewater
- **B3**: bleed of iso-octenes
- **B4**: purge of 1-butene/iso-butenes
- **F10**: fresh make up solvent fed to the second column
- **F12**: feed to recovery unit from 2^{nd} flash separator
- **F13**: feed to recovery unit from 3^{rd} flash separator
- **P11**: purified and water free recovered solvent
- **P12**: purified and recovered 1-butene
- **B11**: bleed stream for heavy components
- **B12**: bleed of wastewater
- **B14**: purge of lights

### Definitions

The expression *'volatiles'* or *'volatile compounds'* as used herein has to be understood as compounds having significantly lower molecular weight in comparison to the polyolefin separated in the process of the invention. Such compounds typically are present in the gaseous form when being exposed to a flash separator. Commonly, the volatile compounds are a mixture of volatile hydrocarbons. Preferably, the mixture of volatile hydrocarbons comprises at least one solvent, optionally monomer, and comonomer.

*'Flash separators'* have been known in the prior art for decades (also as low- pressure separators). As it is well known in the art, a liquid feed is passed to a flash vessel operated at a reduced pressure. Thereby a part of the liquid phase vaporizes and can be withdrawn as an overhead stream (or a vapor stream) from the low-pressure separator. The part remaining in liquid phase is then withdrawn as a bottom stream or a liquid stream from the flash vessel. Operating the low-pressure separator under conditions such that both vapor and liquid phases are present in the flash vessel describes this situation.

The term *'condensation point'* as used herein has to be understood as a combination of conditions, which lead to condensation of compounds from a vaporized mixture. In particular, the condensation point depends on the pressure, the temperature and the combination of hydrocarbons, such as solvent, monomer and optionally comonomer, and any other gaseous components of the system.

The term *'vacuum pressure conditions'* as used herein denotes vacuum pressures between of lower than 1500 mbar(a), preferably lower than 800 mbar(a), and most preferably lower than 200 mbar(a). Preferably, the pressures are not lower than 1 mbar(a), more preferably not lower than 5 mbar(a), and most preferably not lower than 20 mbar(a). Pressures lower than the ranges given above are disadvantageous in view of energy consumption and investment costs. Pressures higher than the ranges given above result in too high amounts of volatiles in the final polymer.

The *'average residence time'* as provided therein has to be understood as the average residence time of the contents in the polymerization reactor including catalyst.

The term *'polyolefin-rich stream'* as defined herein denotes a stream from a separation device separating output streams of a polymerization reactor, wherein the polymer-rich stream has a minimum concentration of the polyolefin of more than 60 wt% with respect to the weight of the whole polymer-rich stream.

The term *'flash temperature'* as used herein denotes the specific temperature which the solution polymerization mixture (containing the polymer, unreacted monomer, solvent, and other components) reaches after a rapid pressure reduction within a flash separator, causing the more volatile components (e.g., solvent, unreacted monomers) to vaporize or "flash" off from the polymer solution. The flash temperature is critical in controlling the separation efficiency, as it is selected to ensure the optimal removal of the volatile components while maintaining the polymer in its dissolved state. This temperature is influenced by the nature of the polymer solution, the operating pressure, and the composition of the volatile components.

The term *'feed temperature for a flash separator"* as used herein denotes the temperature a feed stream comprising the solution polymerization mixture (containing the polymer, unreacted monomer, solvent, and other components) is heated before it enters a flash separator. Usually, as in the flash separator a pressure drop occurs, the feed temperature of a flash separator is higher than the flash temperature in the flash separator.

### Detailed description of the Invention

In the following, the process according to the present invention is described in detail.

### General process of the invention

Generally, the process of the present invention is connected to a solution polymerization process of 1-butene with at least one olefin other than 1-butene. The process of the present invention is used to remove volatile compounds from the product polymer and to recycle streams of components removed from the polymer. Therefore, the solution polymerization process is first described in the following.

### Solution polymerization process

Preferably, the present invention is applicable for supercritical, solution and advanced solution polymerization processes. More preferably are continuous supercritical, solution and advanced solution polymerization processes. Most preferably, the production process comprises a continuous solution polymerization process.

The polymer produced in the solution polymerization process is a polyolefin. Preferably, the polyolefin is polyethylene (PE), in particular high-density polyethylene (HDPE), or linear low-density polyethylene (LLDPE), polyolefin elastomers (POE), polyolefin plastomers (POP), or polypropylene (PP). As the comonomer is 1-butene, the polyolefin is a polyethylene copolymer of 1-butene. Alternatively, the polyolefin is a terpolymer of the monomer propylene, co-monomer 1-butene, and additional co-monomer ethylene.

The monomer is an α-olefin monomer and is selected from the group consisting of linear and cyclic olefins and α-olefins having from 2 to 12 carbon atoms and mixtures thereof. Preferably, the monomer selected from ethylene and propylene, most preferably is ethylene.

In a most preferred embodiment, the polyolefin is produced in a solution polymerization process as disclosed in the following.

The polymerization is typically conducted in the presence of an olefin polymerization catalyst. Preferably, the olefin polymerization catalyst is a metallocene catalyst. Preferably, the polymerization catalyst comprises a metallocene complex and a boron containing cocatalyst and/or an aluminoxane co-catalyst. More preferably, the metallocene catalyst comprises a hafnocene catalyst. Even more preferably, the hafnocene catalyst comprises a hafnocene complex comprising a cyclopentadienyl (Cp) ligand, a fluorenyl (Flu) ligand and a covalent bridge connecting the two ligands.

Thus, more preferably, the polymerization catalyst comprises at least one metallocene complex selected from complexes M1, M2, and M3, or mixtures thereof, which are further described in the following.

Metallocene complex M1 is a metallocene complex of formula (I): 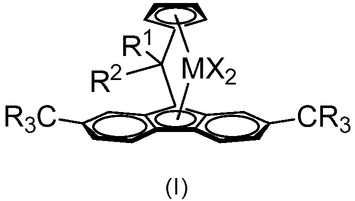 wherein
M is Hf or a mixture with Zr, provided that more than 50% by moles of the complex of formula (I) has M = Hf,
X is a sigma ligand,
R are the same or different from each other and can be saturated linear or branched C₁-C₁₀ alkyl, C₅-C₁₀ aryl, C₆-C₂₀ alkylaryl or C₆-C₂₀ arylalkyl groups, which can optionally contain up to 2 heteroatoms or silicon atoms,
R¹ is a C₆-C₂₀-aryl, which can be unsubstituted or substituted by one or up to 5 linear or branched C₁- C₁₀ alkyl group(s),
R² is a saturated linear or cyclic C₃ - C₂₀ alkyl group or a branched CR³R⁴R⁵ group, wherein R³ is hydrogen or an C₁ - C₂₀ alkyl group and R⁴ and R⁵ are the same or are different and can be an C₁ - C₂₀ alkyl group,

Metallocene complex M2 is a metallocene complex of formula (I),
wherein
M is Hf or a mixture with Zr, provided that more than 50% by moles of the complex of formula (I) has M = Hf,
X is a sigma ligand,
R are the same or different from each other and can be saturated linear or branched C₁-C₁₀ alkyl, C₅-C₁₀ aryl, C₆-C₂₀ alkylaryl or C₆-C₂₀ arylalkyl groups, which can optionally contain up to 2 heteroatoms or silicon atoms,
R¹ is a C₆-C₁₀ aryl or C₆-C₂₀ alkylaryl group optionally containing up to 2 heteroatoms or silicon atoms or a C₄-C₁₀ heteroaryl group
R² is a C₄-C₂₀ cycloalkyl group, optionally carrying alkyl substituents in beta-positions, of formula (II)

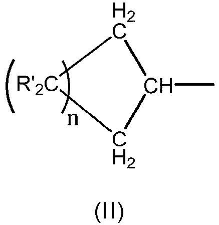

Metallocene complex M3 is a metallocene complex of formula (III): 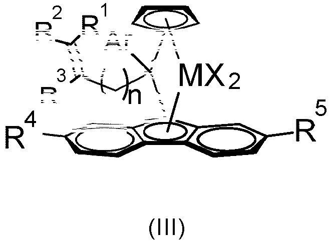 wherein
M is Hf,
X is a sigma-donor ligand,
R¹, R², R³ are the same or different from each other and can be hydrogen or a saturated linear or branched C₁-C₁₀ alkyl, whereby the alkyl group can optionally contain up to 2 heteroatoms belonging to groups 14-16 of the periodic table, or R¹ and R² or R² and R³ can form a ring having 4 to 6 C-atoms and 1 to 3 double bonds,
R⁴ and R⁵ are the same or different from each other and can be saturated linear or branched C₁-C₁₀ alkyl, C₅-C₁₀ aryl, C₆-C₂₀ alkylaryl or C₆-C₂₀ arylalkyl groups, which can optionally contain up to 2 heteroatoms belonging to groups 14-16 of the periodic table,
n can be 1 to 5,
Ar is a C₆-C₂₀-aryl or -heteroarylgroup, which can be unsubstituted or substituted by 1 to 5 linear or branched C₁-C₁₀ alkyl group(s),

Hence, preferably, the polymerization process is preferably conducted in the presence of an olefin polymerization catalyst selected from the list consisting of catalysts C1, C2, C3, and C4, which are described in the following.

Catalyst C1 comprises at least one metallocene complex M1 and a boron containing cocatalyst. As regards the preparation and further details of such catalyst, reference is made to WO 2018/108917 A1, which is herewith incorporated by reference.

Catalyst C2 comprises at least one metallocene complex M2 and a boron containing cocatalyst. As regards the preparation and further details of such catalyst, reference is made to WO 2018/108918 A1, which is herewith incorporated by reference.

Catalyst C3 comprises at least one metallocene complex M3 and an aluminoxane cocatalyst and optionally an aluminium alkyl compound Al(R₇)₃, with R₇ being a linear or branched C₂-C₈-alkyl group. As regards the preparation and further details of such catalyst, reference is made to WO 2018/178151 A1, which is herewith incorporated by reference.

Catalyst C4 comprises at least one metallocene complex M3 and a boron containing cocatalyst. As regards the preparation and further details of such catalyst, reference is made to WO 2018/178152 A1, which is herewith incorporated by reference.

In a solution polymerization process a solvent is also present. The solvent is in liquid or supercritical state in the polymerization conditions. The solvent is typically and preferably a hydrocarbon solvent. The liquid hydrocarbon solvent used is preferably a C₅₋₁₂-hydrocarbon, which may be unsubstituted or substituted by C₁₋₄ alkyl group such as pentane, methyl pentane, hexane, dimethylbutane, heptane, octane, cyclohexane, methylcyclohexane and hydrogenated naphtha. More preferably, unsubstituted C₆₋₁₀-hydrocarbon solvents are used, even more preferably unsubstituted C₅₋₇-hydrocarbon solvents. Most preferably, a C₆ mixture is used.

Other components may also be added into the reactor. It is known to feed hydrogen into the reactor for controlling the molecular weight of the polymer formed during the polymerization.

Typically, the content of the polymer in the stream withdrawn from the solution polymerization process, comprising the solvent, the polymer and the unreacted monomer and optionally comonomer, is from 10 to 35 wt.-%, preferably from 12.5 to 30 wt.-%, more preferably from 15 to 25 wt.-%, and most preferably from 17.5 to 24 wt.-%.

It is, accordingly, preferred in the present invention that no catalyst de-activation agent is added before feeding the stream withdrawn from the solution polymerization reactor to the separation process of the present invention.

Usually, the temperature to which the stream withdrawn from the solution polymerization reactor is heated is at most 100 °C higher than the temperature of the reaction mixture at the outlet of the reactor, more preferably is at most 90 °C higher than the temperature of the reaction mixture at the outlet of the reactor, and most preferably is at most 70 °C higher than the temperature of the reaction mixture at the outlet of the reactor.

The stream withdrawn from the solution polymerization reactor is preferably heated to a temperature of at least 180 °C, more preferably to a temperature of at least 190 °C, still more preferably to a temperature of at least 200 °C, and most preferably to a temperature of at least about 210 °C.

The stream withdrawn from the solution polymerization reactor is preferably heated to a temperature of at most 275 °C, more preferably at most 260 °C and most preferably of at most 250 °C.

Preferably, in the process of the invention no more than 4 wt.% of catalyst in an active state, more preferably no more than 3 wt.% of catalyst in an active state, is leaving the reactor. Consequently, in such a setup, catalyst deactivators can be avoided leading to significantly reduced entrainment of such catalyst deactivators into the recycle streams. Also typically, the stream comprising the hydrocarbons, i.e. the product stream, withdrawn from the reactor is further recycled, i.e. fed to the separation process downstream, to an amount of more than 20% of the total stream withdrawn from the reactor, preferably more than 40% and most preferably more than 60%. Usually, all of the stream comprising the hydrocarbons, i.e. 100%, is further recycled, i.e. fed to the separation process downstream

Said stream is introduced to a separation process according to the present invention as described in the following.

### Separation process of the present invention

In the most general embodiment of the invention, the separation process of the present invention is a process for the separation of at least one polyolefin from a product stream (a) from a solution polymerization process, wherein the product stream (a) comprises the at least one polyolefin and a mixture of volatiles, wherein the mixture of volatiles comprises at least one solvent, at least one olefin, and 1-butene, the process comprising the steps of:
- separating in a *first separation step* at a temperature, preferably flash temperature, of lower than 250 °C and at a pressure of higher than 9 bar(a) the product stream **(a)** into a first 1-butene-rich vapor stream **(b)** and a first condensed polyolefin-rich stream **(c);**
- separating in a *second separation step* the first condensed polyolefin-rich stream **(c)** into a second 1-butene-rich vapor stream **(b')** and a second condensed polyolefin-rich stream **(c');**
- condensing in a *first condensing step* at least a part of the second 1-butene-rich vapor stream **(b')** into a condensed butene-lean recovery stream **(b*)** and a 1-butene-rich vapor recycle stream **(b**);**
wherein the first 1-butene-rich vapor stream **(b)** and the 1-butene-rich vapor recycle stream **(b**)** are introduced into an initial feed stream **(a')** of the solution polymerization process without any further purification step.

Preferably, the mixture of volatiles comprises volatiles, such as solvent**(s)**, monomer**(s)**, and comonomer**(s)**.

Generally, the solvent must be able to dissolve polyolefins, in particular the polyolefin to be separated in the process of the invention. Therefore, preferably, the solvent is a non-polar solvent. Therefore, the solvent preferably is a hydrocarbon. More preferably, the solvent is a paraffinic solvent due to the paraffinic nature of polyolefins (*'Similia similibus solventum*')*.* Aromatic hydrocarbon solvents are known for good solvent properties and can therefore also be considered. Therefore, preferably, the solvent is selected from the list of low boiling solvents and high boiling solvents. Low boiling solvents comprise n-alkanes and aromatic hydrocarbons, such as toluene and xylene. The advantage of low boiling solvents is that they can be separated from dissolved polyolefins with less energy consumption. High-boiling solvents comprise paraffinic gas oil or vacuum gas oil. Such solvents have the disadvantage that they are difficult to be removed from the product. Therefore, preferably, the solvent is selected from the group consisting of C₄, C₅, C₆, C₇, C₈, C₉ and C₁₀ n-alkanes, iso-alkanes, cyclo-alkanes or mixtures thereof, more preferably is selected from the group consisting of C₅, C₆, C₇, C₈, C₉ and C₁₀ n-alkanes, iso-alkanes, cyclo-alkanes or mixtures thereof, even more preferably is selected from the group consisting of C₅, C₆, C₇, and C₈ n-alkanes, iso-alkanes, cyclo-alkanes or mixtures thereof, and most preferably is selected from the group consisting of C₅, C₆, and C₇ n-alkanes, iso-alkanes, cyclo-alkanes or mixtures thereof. In a most preferred embodiment, the solvent is selected from n-pentane and n-hexane, even more preferably is n-hexane. An example for a preferred solvent is Exxsol^{™} Hexane commercially available from ExxonMobil.

Typically, the content of the polymer in the product stream **(a)** withdrawn from the solution polymerization process comprising the solvent, the polymer and the unreacted monomer and optionally comonomer is from 10 to 35 wt.-%, preferably from 12.5 to 30 wt.-%, more preferably from 15 to 25 wt.-%, and most preferably from 17.5 to 24 wt.-%.

In a preferred embodiment of the invention, in the first separation step 60 to 95 wt.-%, preferably 70 to 94 wt.-%, more preferably 80 to 93 wt.-%, and most preferably 88.5 to 92 wt.-%, of the mixture of volatiles are removed from the product stream **(a)** with respect to the total weight of the mixture of volatiles in the product stream **(a).** Likewise, in a preferred embodiment of the invention, in the second separation step 80 to 99 wt.-%, preferably 90 to 99 wt.-%, more preferably 96 to 99 wt.-%, and most preferably 97 to 98 wt.-%, of the mixture of volatiles are removed from the first condensed polyolefin-rich stream **(c)** with respect to the total weight of the mixture of volatiles in the first condensed polyolefin-rich stream **(c).** Moreover, in a preferred embodiment of the invention, in a third separation step up to 90 to 100 wt.-%, preferably 96 to 99.99 wt.-%, and most preferably 99 to 99.95 wt.-% of the mixture of volatiles are removed from the second condensed polyolefin-rich stream **(c')** with respect to the total weight of the mixture of volatiles in the second condensed polyolefin-rich stream **(c').** Hence, mostly preferred, in the first separation step 88.5 to 92 wt.-% of the mixture of volatiles are removed from the product stream **(a)** with respect to the total weight of the mixture of volatiles in the product stream **(a),** in the second separation step 97 to 98 wt.-% of the mixture volatiles are removed from the first condensed polyolefin-rich stream **(c)** with respect to the total weight of the mixture of volatiles in the first condensed polyolefin-rich stream (c), and in the third separation step 99 to 99.95 wt.-% of the mixture volatiles are removed from the second condensed polyolefin-rich stream **(c')** with respect to the total weight of the volatile mixture in the second condensed polyolefin-rich stream **(c').**

Preferably, the at least one polyolefin of product stream **(a)** is an olefin-butene copolymer, preferably an ethylene-butene copolymer, and the process of the present invention is carried out using a production plant suitable for solution polymerizing an olefin-octene copolymer, preferably an ethylene-octene copolymer.

### a) First separation step

Preferably, the first 1-butene-rich vapor stream **(b)** produced in the first separation step is overheated. Preferably, the first separation step is carried out under conditions to allow volatile compounds in the effluent stream to evaporate from the condensed phase, which mainly comprises polymer.

Preferably, temperatures used in the feed stream for the first separation step are between 185 and 240 °C.

Moreover, the first separation step is preferably carried out at a pressure more than 10 bar(a), more preferably more than 12 bar(a), even more preferably more than 12.5 bar(a), and most preferably more than 13 bar(a). Typically, the first separation step is carried out at a pressure of less than 25 bar(a).

Consequently, the first separation step is preferably carried out at a temperature, preferably flash temperature, in the range of from 120 °C to less than 200 °C, preferably in the range of from 155 °C to 190 °C.

Most preferably, the first separation step is carried out at a temperature of the feed stream upstream of the flash valve in the range of 185 to 240 °C and at a flash pressure in the range of from 12 to 25 bar(a). Hence, the conditions as found in the first 1-butene-rich vapor stream **(b)** are set that the mixture of volatiles, i.e. the solvent, unreacted monomer and/or 1-butene, is not at its condensation point.

Therefore, the mixture of compounds in the first 1-butene-rich vapor stream **(b)** is generally found to be present in gaseous form. Hence, preferably, the first separation step is a flash separation step.

The first 1-butene-rich vapor stream **(b)** is introduced into the initial feed stream **(a')** of the polymerization section without the need of a further purification step upon adjustment of temperature and pressure to the requirements of the polymerization reaction. It is believed that with the specific conditions used in this first separation step only components which are not problematic for the polymerization reaction are evaporated in this step. Hence, this stream is predominately consisted of solvent(s), monomer(s), and 1-butene. Preferably, in the first separation step 60 to 95 wt.-% of the mixture of volatiles are removed from the product stream **(a)** with respect to the total weight of the mixture of volatiles in the product stream **(a),** more preferably 70 to 94 wt.-%, still more preferably 80 to 93 wt.-%, and most preferably 88.5 to 92 wt.-%. More specifically, preferably, in the first separation step 70 to 99 wt.-% of the 1-butene are removed from the product stream **(a)** with respect to the weight of 1-butene in the product stream **(a),** more preferably 80 to 98 wt.-%, still more preferably 90 to 97.5 wt.-%, and most preferably 92 to 97 wt.-%.

As indicated above, the first 1-butene-rich vapor stream (b) contains a major part of the non-reactive solvent and a big part of non-reacted 1-butene next to non-reacted monomers. On the other hand, preferably, the polyolefin solution concentration in the first condensed polyolefin-rich stream **(c)** is more than 60 wt.-%, preferable more than 65 wt.-%, and most preferably more than 67 wt.-%. If the polymer concentration in the first condensed polyolefin-rich stream **(c)** is lower than 60 wt.-%, the amount of volatiles in the final polymer product will have higher levels due to higher amount of solvent residing in the polymer. The polymer concentration in the first condensed polyolefin-rich stream **(c)** depends on the flashing conditions in the first separation step or generally in the flash separation steps. In the following, it is explained, that and why it is important to have the required temperature of the stream introduced into the flash separation step, i.e. the product stream **(a)** entering the first separation step.

In a preferred embodiment, in the first separation step the first 1-butene-rich vapor stream **(b)** is subjected to a fractionating step, wherein liquid and polymer entrained in the first 1-butene-rich vapor stream **(b)** are removed from the first 1-butene-rich vapor stream **(b)** and returned into the first separation step. The fractionating step is preferably carried out at a temperature of lower than 200 °C and at a pressure of higher than 9 bar(a).

### b) Second separation step

Preferably, also the second 1-butene-rich vapor stream **(b')** produced in the second separation step is overheated. Preferably, the second separation step is carried out under conditions to allow volatile compounds in the effluent stream to evaporate from the first condensed polyolefin-rich stream **(c),** which mainly comprises polymer.

Preferably, temperatures used for the feed stream in the second separation step are between 150 and 300 °C, more preferably between 175 and 275 °C, more preferably between 200 and 250 °C. Moreover, the second separation step is preferably carried out at a pressure of 1 to 15 bar(a), more preferably 1 to 12 bar(a), and most preferably 1.5 to 10 bar(a). Hence, preferably the second separation step is a flash separation step.

If flash separation steps are carried out several times in a row, the pressure is lowered step after step and the temperature of the polyolefin is usually increased step after step. Thus, the pressure in the second separation step is lower than in the first separation step, if the first separation step is carried out as a flash separation step. Furthermore, the temperature in the second separation step is higher than in the first separation step, if the first separation step is carried out as a flash separation step. Most preferably, in such case, the second separation step is carried out at a temperature of 200 to 250 °C and at a pressure of 1.5 to 10 bar(a).

Hence, the conditions as found in the second 1-butene-rich vapor stream **(b')** are set that the mixture of volatiles, i.e. the solvent, unreacted monomer and/or 1-butene, is not at its condensation point. Therefore, the mixture of compounds in the second 1-butene-rich vapor stream **(b')** is generally found to be present in gaseous form.

Preferably, in the second separation step 80 to 99 wt.-% of the mixture of volatiles are removed from the first condensed polyolefin-rich stream **(c)** with respect to the total weight of the mixture of volatiles in the first condensed polyolefin-rich stream **(c),** more preferably 90 to 99 wt.-%, even more preferably 94 to 99 wt.-%, and most preferably 95 to 98 wt.-%.

More specifically, preferably, in the second separation step 90 to 100 wt.-% of the 1-butene is removed from the first condensed polyolefin-rich stream **(c)** with respect to the total weight of 1-butene in the first condensed polyolefin-rich stream **(c),** more preferably 94 to 99.9 wt.-%, still more preferably 96 to 99.5 wt.-%, and most preferably 98 to 99.2 wt.-%.

It is also preferable that subsequently of the second separation step and prior to the first condensing step no fractionating step is carried out. Hence, preferably, any fractionating step is absent subsequently of the second separation step and prior to the first condensing step. However, preferably, an entrained polymer removal step can be applied to the 1-butene-rich recycle stream **(b'),** preferably using a knock-out pot suitable for draining of entrained polymer from **(b').**

### c) First condensing step of the second separation step

In the first condensing step a part of the second 1-butene-rich vapor stream **(b')** is condensed in a partial condensation of the 1-butene rich vapor **(b')** thereby forming a 1-butene lean condensed stream **(b*)** and a 1-butene rich vapor stream **(b**).** Thereby it is ensured that the amount of impurities, in particular the amount of solvent and other higher boiling components, in the remaining vapor stream is reduced and the amount of monomer(s) and 1-butene in the condensed part is also reduced.

This is preferably achieved by carrying out the first condensing step at a temperature in the range of from 50 to 90 °C, preferably in the range of from 55 to 85 °C, and most preferably in the range of from 60 to 80 °C.

Preferably, the condensed butene-lean recovery stream **(b*)** withdrawn from the first condensing step is purified in a recovery section and optionally subsequently returned to the initial feed stream **(a')** of the polymerization section.

Preferably, the mass flow rate of the 1-butene-rich vapor recycle stream **(b**)** is less than 70% of the mass flow rate of the second 1-butene-rich vapor stream **(b'),** more preferably is less than 65%, most preferably is less than 63%. Typically, the mass flow rate of the 1-butene-rich vapor recycle stream **(b**)** is higher than 25% of the mass flow rate of the second 1-butene-rich vapor stream **(b'),** or higher than 33%. Hence, more preferably, the mass flow rate of the 1-butene-rich vapor recycle stream **(b**)** is in the range of from 25 to 65% of the mass flow rate of the second 1-butene-rich vapor stream **(b'),** even more preferably in the range of from 33 to 63%.

### d) Third separation step

Preferably, the process of the present invention further comprises the step of
- separating in a third separation step the second condensed polyolefin-rich stream **(c')** into a last vapor stream **(b^{#})** and a last condensed polyolefin-rich stream **(c^{#}).**

In a preferred embodiment of the invention the third separation step is a flash separation step preferably with preceding addition of a stripping agent into the second condensed polyolefin-rich stream **(c')** or an extruding/degassing step.

If the third separation step is a flash separation step, the stripping agent is preferably added to the second condensed polyolefin-rich stream **(c')** before being introduced into the third separation step. More preferably, the stripping agent is added in an amount of 0.2 to 3 wt.-% with respect to the total weight of the second condensed polyolefin-rich stream **(c').** Most preferably, the stripping agent is added in an amount of 0.2 to 1 wt.-% with respect to the total weight of the second condensed polyolefin-rich stream **(c').**

Preferably, if the third separation step is a flash separation step, the third separation step is carried out at a temperature of 200 to 250 °C. Moreover, in such case, the third separation step is preferably carried out at vacuum pressure conditions.

If flash separation steps are carried out several times in a row, the pressure is lowered step after step and the temperature is usually increased step after step. Thus, the pressure in the third separation step is lower than in the second separation step, if the third separation step is carried out as a flash separation step. Furthermore, the temperature in the third separation step is higher than in the second separation step, if the third separation step is carried out as a flash separation step. Preferably, in case the third separation step is a flash separation step, the third separation step is carried out at a temperature of 150 to 300 °C, preferably 175 to 275 °C, and most preferably 200 to 250 °C. Moreover, in such case, the third separation step is preferably carried out at vacuum pressure conditions. Hence, most preferably, in case the third separation step is a flash separation step, the stripping agent is fed in an amount of 0.2 to 3 wt.-%, even more preferably 0.2 to 1 wt.-%, with respect to the total weight of the second condensed polyolefin-rich stream **(c')** before the second condensed polyolefin-rich stream **(c')** enters the flash separator, and the third separation step is carried out at a temperature of 200 to 250 °C and at vacuum pressure conditions.

If the third separation step is an extruding/degassing step, the second condensed polyolefin-rich stream **(c')** is preferably introduced into a devolatilization extruder. Preferably, the extruder has a backward degassing at a pressure in the range of 0.5 bar above atmospheric pressure to 0.5 bar below atmospheric pressure, preferably at atmospheric pressure, whereby atmospheric pressure denotes the natural atmospheric pressure of the earth's atmosphere varying at about 1 atm, and forward degassing domes at vacuum conditions. Most preferably, the extruder makes use of a stripping agent dosing upstream of the forward degassing domes.

Preferably, in the third separation step 90 to 100 wt.-% of the mixture of volatiles are removed from the second condensed polyolefin-rich stream **(c')** with respect to the total weight of the mixture of volatiles in the second condensed polyolefin-rich stream **(c'),** more preferably 96 to 99.9 wt.-%, and most preferably 98 to 99.8 wt.-%.

Specifically, preferably, in the third separation step 90 to 100 wt.-% of the 1-butene are removed from the second condensed polyolefin-rich stream **(c')** with respect to the weight of 1-butene in the second condensed polyolefin-rich stream **(c'),** more preferably 96 to 99.99 wt.-%, and most preferably 99 to 99.95 wt.-%.

The stripping agent is preferably selected from the list consisting of carbon dioxide, nitrogen, and water. Most preferably, the stripping agent is water.

The last condensed polyolefin-rich stream **(c^{#})** is mainly comprised by the polyolefin produced in the polymerization reaction.

Preferably, the last vapor stream **(b^{#})** withdrawn from the third separation step is purified in a recovery section and optionally subsequently returned to the initial feed stream **(a')** of the polymerization section.

The stripping agent, such as water, needs to be heated to a temperature close to the polymer, at least above the melting temperature to prevent solidification of the polymer and to keep sufficient heat in the mixture prior the flash. Due to high velocities in the third separation step, polymer can still be entrained, and this entrained polymer needs to be removed upstream of the vacuum unit. Thus, preferably, a vapor-liquid separator is used. Also, preferably, a knock-out pot could be used to drain off entrained polymers. Nevertheless, installed coolers upstream of the vapor-liquid separator can easily foul due to low temperatures on the utility side.

It has now been found that the problem can be solved by transferring the heat of the last vapor stream **(b^{#})** to heat the stripping agent stream. In this way the last vapor stream **(b^{#})** is pre-cooled and a smaller temperature gradient is observed. Furthermore, the step of transferring the heat can be operated at a higher temperature, e.g. above the polymer melting point. This has the advantage that potentially entrained polymer is not solidifying on the heat exchangers tubes , but rather stays liquefied and can be separated. Another advantage is that an energetically more efficient process is obtained.

Hence, preferably, in the process of the present invention, the stripping agent is heated by exchanging heat with the last vapor stream **(b^{#})** before entering the second condensed polyolefin-rich stream **(c').**

### e) Recovery step

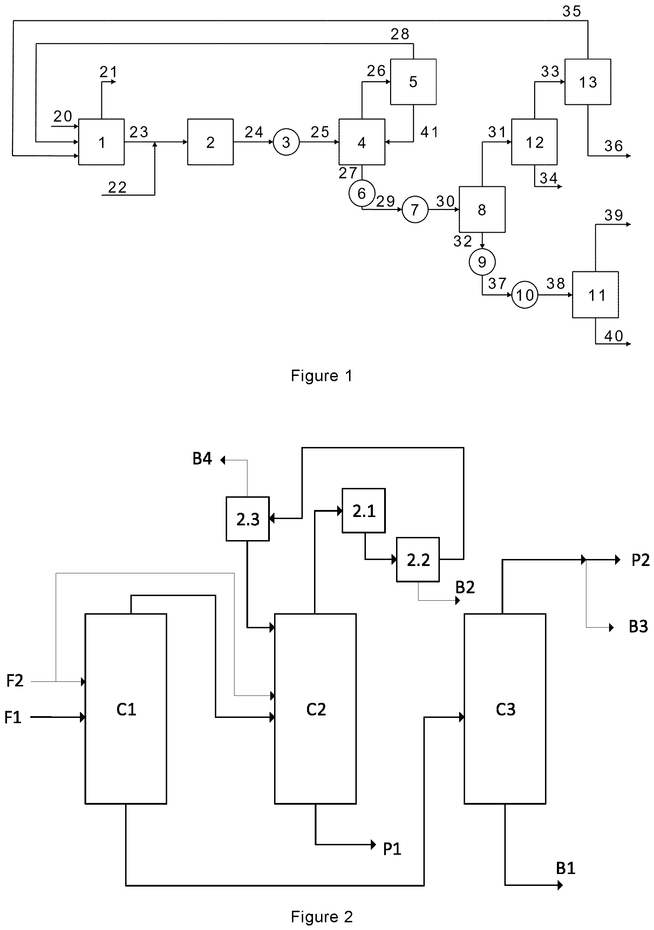

Usually, the recovery steps described in the prior art are carried out in recovery sections comprising three distillation columns to recover flush solvent and comonomer, such as octenes, and to remove impurities such as water, inert light components and heavy components. Thereby, the first distillation column separates solvent via the top from comonomers via the bottom. The top stream, distillate, of the first distillation column is fed to a second separation column. Optionally fresh make-up solvent can be added to the first and/or the second column. The fresh solvent (and fresh comonomer) can contain traces of water. Furthermore, also certain recovered hydrocarbon streams can contain some water. Via the second separation column usually water is stripped of from the solvent by the reboiler. Thereby, pure flush solvent is obtained from the bottom of the second column and is fed to dryers to be recycled to the process. It is usually required that the flush solvent has a low concentration in monomers and comonomers. The bottom fraction of the first distillation column is fed to the third column. In this column, heavy components are removed via the bottom of the third column and are collected and removed from the process. A schematic drawing of a recovery section as described in the prior art is depicted in Figure 2.

The process as described in the prior art cannot be directly used for a polymerization using 1-butene as comonomer. Hence, the present invention solves this problem by providing a process for the separation of at least one polyolefin from a product stream **(a)** from a solution polymerization process, which can be carried out on a recovery section as known from the prior art with minor modifications. The modifications are limited and enable smooth transition from a co-monomer with a higher boiling point than the solvent to a co-monomer with a lower temperature than the solvent, most preferably to enable a recovery of solvent and co-monomers for transition of ethylene or propylene copolymerization with 1-octene as co-monomer to 1-butene as comonomer.

The modifications are that the first column will remove the higher molecular weight components, and those components can be discharged from the process via the bottom stream of the first column C1 to stream B1. Another advantage is that the third column can be taken out of operation or running on minimum load when producing the butene copolymers.

Generally, in case of 1-butene operation the first column acts as a column for heavy component removal and the second column is used to remove 1-butene from the flush solvent. The third column is not necessarily needed to be in operation for 1-butene operation.

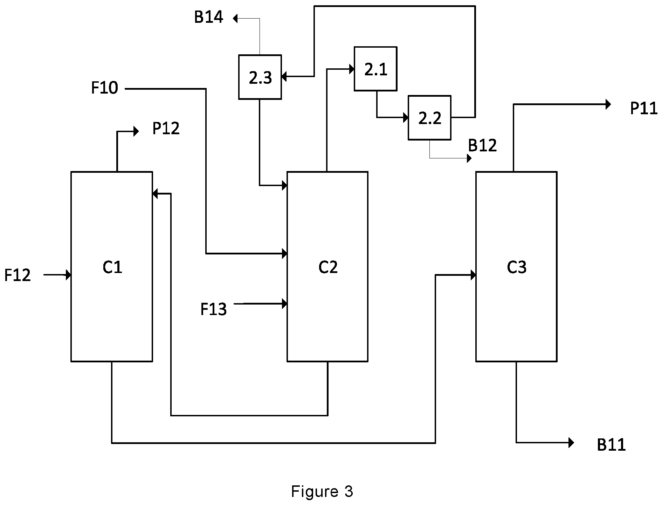

An alternative solution for the recovery section is depicted in Figure 3.

Hence, in the alternative solution shown in Figure 3, the streams from and within the recovery section are re-arranged using valves. Furthermore, operating conditions in the recovery are modified. In contrast to the recovery section known from the prior art as depicted in Figure 2, the streams from the second and third separation step are not combined but fed individually to the first and the second column, respectively. Fresh solvent is fed to the second column. Hence, potential water comprising streams are only fed to the second column.

In this re-arranged recovery section, 1-butene and solvent are recovered together via the bottom of the second column and fed to the first column. 1-butene can be selectively recovered as distillate from the top of the first column, whereby solvent and heavy components withdrawn from the bottom of the first column are fed to the third column. Purified and water free solvent is recovered from the top of the third column and heavy components are removed via the bottom.

The recovery step of the present invention as depicted in Figure 3 has the advantage that the second separation step can be operated with higher condensation and more 1-butene can be fed to the recovery section.

Hence, preferably, in the process according to the present invention the condensed butene-lean recovery stream **(b*)** and/or the last vapor stream **(b^{#})** are subjected to a recovery step.

Preferably, the recovery step comprises a first and a second distillation step, wherein the first distillation step receives the condensed butene-lean recovery stream **(b*),** wherein the second separation step receives the last vapor stream **(b^{#})** and a stream comprising fresh solvent, wherein the first distillation step receives a second bottom stream **(d')** from the second separation step comprising 1-butene, heavy hydrocarbons, and solvent, wherein a first bottom stream **(d)** leaves the first distillation step comprising solvent and heavy hydrocarbons, wherein a first top stream **(e)** leaves the first distillation step comprising 1-butene, and wherein a second top stream **(e')** leaves the second washing step comprising light volatiles and water.

Hence, in such a recovery step, preferably, the second bottom stream **(d')** comprises 1-butene, heavy hydrocarbons, and solvent. Also preferably, the first bottom stream **(d)** comprises solvent and heavy hydrocarbons. Accordingly, the first top stream **(e)** comprises 1-butene. Finally, preferably, the second top stream **(e')** comprises light volatiles and water.

Optionally, the recovery step comprises a third distillation step, wherein the first bottom stream **(d)** is received by the third distillation step, wherein a third bottom stream **(d*)** leaves the third distillation step and wherein a third top stream **(e*)** leaves the third distillation step. Preferably, the third bottom stream **(d*)** comprises heavy hydrocarbons and wherein the third top stream **(e*)** comprises the solvent.

In another preferred embodiment, the process further comprises the step of cooling the second top stream **(e')** to a temperature below the condensation temperature of said second top stream **(e')** thereby producing a cooled condensed stream **(e").**

Preferably, the process further comprises the step of separating in a liquid-liquid separation step the second the cooled condensed stream **(e")** in a heavy liquid stream **(f)** and a light liquid stream **(f').** Preferably, the heavy liquid stream **(f)** comprises water and the light liquid stream **(f')** comprises 1-butene, solvent, and light volatiles.

Also preferably, the process further comprises the step of heating the light liquid stream **(f')** in a heat exchanging step yielding a liquid recycle stream **(f*)** and a gaseous purge stream **(f^{#}),** wherein the liquid recycle stream **(f*)** is returned as reflux to the second separation step. The liquid recycle stream **(f*)** may comprise 1-butene and solvent and the gaseous purge stream **(f^{#})** may comprise light volatiles.

### Polyolefin

The polyolefin obtainable by the process of the present invention preferably comprises less than 500 wt.-ppm volatiles from the mixture of volatiles, preferably less than 200 wt.-ppm volatiles, most preferably equal to or less than 150 wt.-ppm volatiles.

The polyolefin obtainable by the process disclosed herein is an olefin-butene copolymer, preferably an ethylene-butene copolymer.

### Test Methods

### a) Volatiles content

The volatile content of the polyolefin is determined using head space extraction according to VDA 277:1995 using a gas chromatograph and a headspace method. The equipment was an Agilent gas chromatograph with a WCOT-capillary column (wax type) of 30 m length and 0.25 mm x 1.0 micrometer inner diameter (1 µm film thickness). A flame ionization detector was used with hydrogen as a fuel gas. The GC settings were as follows: 3 minutes isothermal at 50 °C, heat up to 200 °C at 12 K/min, 4 minutes isothermal at 200 °C, injection-temperature: 200 °C, detection-temperature: 250 °C, carrier helium, flow-mode split 1:20 and carrier gas flow rate of 1 ml/min. The emission potential was measured on the basis of the sum of all values provided by the emitted substances after gas chromatography analysis and flame ionization detection with acetone as the calibration standard. Sample introduction (pellets, about 2 g) was by headspace analysis (20 ml head space vial) after conditioning at 120 °C for 5 hours prior to the measurement. The unit is microgram carbon per gram of sample, respectively wt.-ppm.

### Examples

In the following inventive example, the present invention is exemplified using calculations with Aspen HYSYS V12.1.

Reference hereinafter to "C6 mixture" refers to a solvent mixture comprising n-hexane, 2- and 3-methyl-pentane, 2,3-dimethylbutane, cyclohexane, and methyl-cyclopentane.

### Inventive Example IE1

Inventive Example IE1 has been carried out using a setup according to Figure 1. In IE1 solution polymerization of ethylene and 1-butene in C6 mixture as solvent for the production of 500 kg/h of an ethylene-butene copolymer with a density of 860 kg/m³ has been calculated. The feed temperature of the 1^{st} flash separator **(4)** is kept at about 235 °C and the pressure in the 1^{st} flash separator **(4)** is kept at 14 bar(a). Moreover, the polymer-rich stream is heated upstream of the 2^{nd} flash separator **(8)** to a temperature of about 250 °C and the pressure in the 2^{nd} flash separator **(8)** is kept as 1.5 bar(a).

The vapor phase withdrawn **(31)** from the 2^{nd} flash separator **(8)** is partly condensed in the condensation unit **(13)** in IE1 according to the invention. Thus, only the condensed part **(36)** of the vapor phase withdrawn **(31)** from the 2^{nd} flash separator **(8)** is fed to the recovery unit. This stream **(36)** comprises about 100 kg/h of solvent, which is purified over the recovery unit. It should be noted that in IE1 45 wt.-% of the vapor phase **(31)** withdrawn from the 2^{nd} flash separator **(8)** is condensed. Thereby, a major part of the comonomer 1-butene (> 90 wt.-%) is still present in the non-condensed part **(35)** of the vapor phase **(31)** withdrawn from the 2^{nd} flash separator **(8)** and is directly recycled, i.e. without further purification, to the feed vessel **(1)** and thus returned into the polymerization reactor **(2).**

The total amount of 1-butene fed to the recovery unit is 0.37 kg/h and the total mass stream to the recovery unit is 112 kg/h. The concentration of 1-butene is 0.33 wt.-% in the feed to the recovery unit. Further details can be retrieved from Table 1.

**Table 1: Results of IE1**

| *Stream** | | **24** | **25** | **26** | **27** | **30** | **31** | **32** | **35** | **36** | **39** | **40** |
|---|---|---|---|---|---|---|---|---|---|---|---|---|
| total mass flow | kg/h | 2796 | 2796 | 2061 | 735 | 735 | 228 | 508 | 125 | 103 | 9.4 | 500 |
| temperature | °C | 176 | 235 | 182 | 182 | 250 | 229 | 229 | 76 | 79 | 249 | 249 |
| pressure | bar(a) | | | 14 | 14 | 56 | 1.5 | 1.5 | 1.5 | 10 | 0.02 | 0.02 |
| vapor fraction | % | 0 | 0 | 100 | 0 | 0 | 100 | 0 | 100 | 0 | 100 | 0 |
| ethylene | kg/h | 68 | 68 | 67 | 1 | 1 | 1 | 0 | 1 | 0 | 0 | 0 |
| 1-butene | kg/h | 131 | 131 | 125 | 5.6 | 5.6 | 5.55 | 0.05 | 5.3 | 0.32 | 0.05 | 0 |
| solvent** | kg/h | 2009 | 2009 | 1786 | 223 | 223 | 218 | 5.6 | 115 | 103 | 5.6 | 0 |
| iso-butenes | kg/h | 83 | 83 | 80 | 3.4 | 3.4 | 3.4 | 0.03 | 3.2 | 0.2 | 0 | 0 |
| hydrogen | g/h | 27 | 27 | 27 | 0.1 | 0.1 | 0.1 | 0 | 0.1 | 0 | 0 | 0 |
| methane | g/h | 49 | 49 | 48 | 0.5 | 0.5 | 0.4 | 0 | 0.4 | 0 | 0 | 0 |
| ethane | kg/h | 3.9 | 3.9 | 3.8 | 0.1 | 0.1 | 0.1 | 0 | 0.1 | 0 | 0 | 0 |
| polymer | kg/h | 502 | 502 | 0 | 502 | 502 | 0 | 502 | 0 | 0 | 1.7 | 500 |
| 1-butene | wt% | 4.7 | 4.7 | 6.1 | 0.8 | 0.8 | 2.4 | 0.01 | 4.2 | 0.3 | 0.6 | 0 |

| | | | | | | | | | | | | |
|---|---|---|---|---|---|---|---|---|---|---|---|---|
| * References refer to streams as denoted in Figure 1 ** Solvent is n-hexane | | | | | | | | | | | | |

### Comparative Example CE1

Comparative Example CE1 has been carried out using a setup according to Figure 1. In CE1 solution polymerization of ethylene and 1-octene in C6 mixture as solvent for the production of 500 kg/h of ethylene-octene copolymer with a density of 882 kg/m³ has been calculated. The feed temperature of the 1^{st} flash separator **(4)** is kept at about 250 °C and the pressure in the 1^{st} flash separator **(4)** is kept at 11.5 bar(a). Moreover, the polymer-rich stream **(27)** is heated upstream of the 2^{nd} flash separator **(8)** to a temperature of about 250 °C and the pressure in the 2^{nd} flash separator **(8)** is kept as 1.5 bar(a).

The polymer weight fraction in the liquid phase **(27)** of the 1^{st} flash separator **(4)** is about the same in IE1 and CE1, and in both cases about 68 wt.%.

The vapor phase **(31)** withdrawn from the 2^{nd} flash separator **(8)** in CE1 is nearly completely condensed (99%). The complete condensed stream **(36)** was directed to the recovery unit. The 1-octene content in the total mass flow to the recovery unit is in CE1 20 wt.-%. Further details can be retrieved from Table 2.

**Table 2: Results of CE1**

| *Stream** | | **24** | **25** | **26** | **27** | **30** | **31** | **32** | **35** | **36** | **39** | **40** |
|---|---|---|---|---|---|---|---|---|---|---|---|---|
| total mass flow | kg/h | 2307 | 2307 | 1588 | 739 | 739 | 224 | 514 | 3 | 221 | 24.6 | 500 |
| temperature | °C | 174 | 250 | 201 | 201 | 250 | 228 | 228 | 55 | 92 | 238 | 238 |
| pressure | bar(a) | | | 11.5 | 11.5 | 56 | 1.5 | 1.5 | 1.5 | 10 | 0.02 | 0.02 |
| vapor fraction | % | 0 | 0 | 100 | 0 | 0 | 100 | 0 | 100 | 0 | 100 | 0 |
| ethylene | kg/h | 56 | 56 | 55 | 0.8 | 0.8 | 0.8 | 0 | 0.8 | 0 | 0 | 0 |
| 1-octene | kg/h | 232 | 232 | 188 | 49 | 49 | 46 | 3.3 | 0 | 46 | 3.3 | 0 |
| solvent** | kg/h | 1285 | 1285 | 1161 | 134 | 134 | 130 | 4.1 | 2 | 128 | 4.1 | 0 |
| iso-octenes | kg/h | 224 | 224 | 178 | 51 | 51 | 48 | 3.8 | 0 | 48 | 3.8 | 0 |
| hydrogen | g/h | 27 | 27 | 27 | 0.1 | 0.1 | 0.1 | 0 | 0.1 | 0 | 0 | 0 |
| methane | g/h | 34 | 34 | 34 | 0.3 | 0.3 | 0.3 | 0 | 0.3 | 0 | 0 | 0 |
| ethane | kg/h | 6.7 | 6.7 | 5.9 | 0.1 | 0.1 | 0.1 | 0 | 0.1 | 0 | 0 | 0 |
| polymer | kg/h | 503 | 503 | 0 | 503 | 503 | 0 | 503 | 0 | 0 | 3 | 500 |
| 1-octene | wt% | 10.1 | 10.1 | 11.8 | 6.7 | 6.7 | 20.5 | 0.6 | 0.8 | 20.8 | 13.4 | 0 |

| | | | | | | | | | | | | |
|---|---|---|---|---|---|---|---|---|---|---|---|---|
| * References refer to streams as denoted in Figure 1 ** Solvent is n-hexane | | | | | | | | | | | | |

### Inventive Example IE2

Inventive Example IE2 has been carried out using a setup according to Figure 1. In IE2 solution polymerization of ethylene and 1-butene in n-pentane as solvent for the production of 500 kg/h of an ethylene-butene copolymer with a density of 860 kg/m³ has been calculated.

The feed temperature of the 1^{st} flash separator **(4)** is kept at about 210 °C and the pressure in the 1^{st} flash separator **(4)** is kept at about 18 bar(a) resulting in a flash temperature of about 157 °C. The vapor stream **(26)** withdrawn from the 1^{st} flash separator **(4)** is fed to a fractionator (scrubber) **(5),** which is operated at a pressure of 17.5 bar(a). Moreover, the polymer-rich stream **(27)** is heated upstream of the 2^{nd} flash separator **(8)** to a temperature of about 250 °C and the pressure in the 2^{nd} flash separator **(8)** is kept as 3 bar(a). The vapor stream **(31)** withdrawn from the 2^{nd} flash separator **(8)** is partly condensed, wherein the non-condensed part **(35)** of the vapor stream **(31)** from the 2^{nd} flash separator **(8)** is recycled to the feed vessel **(1).** The condensed part **(36)** of the vapor stream **(31)** withdrawn from the 2^{nd} flash separator is fed to the recovery unit. The temperature at the condenser **(13)** is at 67-68 °C. About 43 wt.-% of the vapor stream **(31)** withdrawn from the 2^{nd} flash separator is fed to the recovery unit in order to have sufficient purified solvent (100 kg/h). The remaining 57 wt.-% of the vapor stream **(31)** withdrawn from the 2^{nd} flash separator is recycled to the feed vessel **(1)** without further purification.

The liquid stream **(32)** withdrawn from the 2^{nd} flash separator **(8)** is heated and fed to a 3^{rd} flash separator **(11).** The vapor stream **(39)** withdrawn from the 3^{rd} flash separator is condensed and potential stripping agent is separated from this hydrocarbon condensed phase. This hydrocarbon condensed stream is fed to the recovery unit together with the condensed part **(36)** of the vapor stream **(31)** from the 2^{nd} flash separator **(8).**

The total 1-butene fed to the recovery unit is about 1.3 kg/h, or 1.2 wt.-% of the total feed to the recovery unit. Further details can be retrieved from Table 3.

**Table 3: Results of IE2**

| *Stream** | | **24** | **25** | **26** | **27** | **30** | **31** | **32** | **35** | **36** | **39** | **40** |
|---|---|---|---|---|---|---|---|---|---|---|---|---|
| total mass flow | kg/h | 2798 | 2798 | 2073 | 736 | 736 | 227 | 508 | 130 | 98 | 10 | 500 |
| temperature | °C | 176 | 210 | 157 | 157 | 250 | 231 | 231 | 67.7 | 70 | 249 | 249 |
| pressure | bar(a) | | | 18.25 | 18.35 | 56 | 3 | 3 | 3 | 18 | 0.02 | 0.02 |
| vapor fraction | % | 0 | 0 | 100 | 0 | 0 | 100 | 0 | 100 | 0 | 100 | 0 |
| ethylene | kg/h | 68 | 68 | 66 | 1.4 | 1.4 | 1.4 | 0 | 1.4 | 0.02 | 0.01 | 0 |
| 1-butene | kg/h | 130.4 | 130.4 | 122.5 | 8.2 | 8.2 | 8.1 | 0.13 | 6.88 | 1.18 | 0.13 | 0 |
| solvent** | kg/h | 2014 | 2014 | 1804 | 219 | 219 | 213 | 6 | 117 | 96 | 5.9 | 0 |
| iso-butenes | kg/h | 83.5 | 83.5 | 78.7 | 5 | 5 | 4.9 | 0.1 | 4.3 | 0.6 | 0.1 | 0 |
| hydrogen | g/h | 25 | 25 | 25 | 0.1 | 0.1 | 0.1 | 0 | 0.1 | 0 | 0 | 0 |
| methane | g/h | 45.1 | 45.1 | 44.6 | 0.6 | 0.6 | 0.6 | 0 | 0.6 | 0 | 0 | 0 |
| ethane | kg/h | 0.44 | 0.44 | 0.43 | 0.01 | 0.01 | 0.01 | 0 | 0.01 | 0 | 0 | 0 |
| polymer | kg/h | 502 | 502 | 0 | 502 | 502 | 0 | 502 | 0 | 0 | 2 | 500 |
| 1-butene | wt% | 4.7 | 4.7 | 5.9 | 1.1 | 1.1 | 3.5 | 0 | 5.3 | 1.2 | 1.3 | 0 |

| | | | | | | | | | | | | |
|---|---|---|---|---|---|---|---|---|---|---|---|---|
| * References refer to streams as denoted in Figure 1 ** Solvent is n-pentane | | | | | | | | | | | | |

### Inventive Example IE3

Inventive Example IE3 has been carried out using a setup according to Figure 1. In IE3 solution polymerization of ethylene and 1-butene in C₆ mixture as solvent for the production of 500 kg/h of an ethylene-butene copolymer with a density of 910 kg/m³ and a melt index of 1.1 dg/min has been calculated.

The feed temperature of the 1^{st} flash separator **(4)** is kept at about 240 °C and the pressure in the 1^{st} flash separator **(4)** is kept at 13.5 bar(a). The polymer weight fraction in the liquid phase of the 1^{st} flash separator **(4)** is about 70 wt.-%. The polymer-rich stream **(27)** is heated upstream of the 2^{nd} flash separator **(8)** to a temperature of about 250 °C and the pressure in the 2^{nd} flash separator **(8)** is kept as 1.5 bar(a). The vapor stream **(31)** withdrawn from the 2^{nd} flash separator **(8)** is partly condensed, wherein the non-condensed part **(35)** of the vapor stream **(31)** from the 2^{nd} flash separator **(8)** is recycled to the feed vessel **(1).** The condensed part **(36)** of the vapor stream **(31)** withdrawn from the 2^{nd} flash separator is fed to the recovery unit. About 45 wt.-% of the vapor stream **(31)** withdrawn from the 2^{nd} flash separator is fed to the recovery unit in order to have sufficient purified solvent (about 90-100 kg/h). The remaining 55 wt.-% of the vapor stream **(31)** withdrawn from the 2^{nd} flash separator is recycled to the feed vessel **(1)** without further purification.

A major part of the comonomer 1-butene (> 90 wt.-%) is in this way direct recycled to the feed vessel **(1)** and so returned to the reactor **(2).**

The total amount of 1-butene fed to the recovery unit is about 0.1 kg/h and the total mass stream to the recovery unit is about 100 kg/h. The concentration of 1-butene is about 0.1 wt.-% in the feed to the recovery unit. Further details can be retrieved from Table 4.

**Table 4: Results of IE3**

| *Stream** | | **24** | **25** | **26** | **27** | **30** | **31** | **32** | **35** | **36** | **39** | **40** |
|---|---|---|---|---|---|---|---|---|---|---|---|---|
| total mass flow | kg/h | 2688 | 2688 | 1979 | 710 | 710 | 202 | 507 | 110 | 92 | 9.4 | 500 |
| temperature | °C | 198 | 240 | 188 | 188 | 250 | 231 | 231 | 78 | 80 | 249 | 249 |
| pressure | bar(a) | | | 13.5 | 13.5 | 56 | 1.5 | 1.5 | 1.5 | 10 | 0.02 | 0.02 |
| vapor fraction | % | 0 | 0 | 100 | 0 | 0 | 100 | 0 | 100 | 0 | 100 | 0 |
| ethylene | kg/h | 35 | 35 | 34 | 0.48 | 0.48 | 0.48 | 0.00 | 0.48 | 0.003 | 0.002 | 0.000 |
| 1-butene | kg/h | 33 | 33 | 31 | 1.29 | 1.29 | 1.28 | 0.01 | 1.21 | 0.072 | 0.014 | 0.000 |
| solvent** | kg/h | 2010 | 2010 | 1807 | 202 | 202 | 197 | 6 | 105 | 92 | 5.7 | 0.02 |
| iso-butenes | kg/h | 91 | 91 | 88 | 3.5 | 3.5 | 3.4 | 0.04 | 3.3 | 0.2 | 0.04 | 0.00 |
| hydrogen | g/h | 34 | 34 | 34 | 0.1 | 0.1 | 0.1 | 0.00 | 0.1 | 0.0 | 0.00 | 0.00 |
| methane | g/h | 757 | 757 | 750 | 6.6 | 6.6 | 6.6 | 0.02 | 6.6 | 0.0 | 0.02 | 0.00 |
| ethane | kg/h | 91.5 | 91.5 | 88.0 | 3.5 | 3.5 | 3.4 | 0.04 | 3.3 | 0.2 | 0.04 | 0.00 |
| polymer | kg/h | 502 | 502 | 0 | 502 | 502 | 0 | 502 | 0 | 0 | 1.7 | 500 |
| 1-butene | wt% | 1.2 | 1.2 | 1.6 | 0.18 | 0.18 | 0.63 | 0.00 | 1.1 | 0.08 | 0.15 | 0.00 |

| | | | | | | | | | | | | |
|---|---|---|---|---|---|---|---|---|---|---|---|---|
| * References refer to streams as denoted in Figure 1 ** Solvent is a C₆ mixture | | | | | | | | | | | | |

### Inventive Example IE4

The same calculation as for Inventive Example IE2 has been carried out with the exception that the pressure of the 1^{st} flash separator has been set to about 30 bar(a). At this pressure it is still possible to get 68.5 wt% polymer solution with a flash inlet temperature of 230°C.

### Inventive Example IE5

The calculation of Inventive Example IE2 is carried out with the exception that the 1^{st} flash separator is operated at 21 bar(a) and the feed temperature of the 1^{st} flash separator **(4)** is kept at 215 °C. Moreover, the 2^{nd} flash separator is operated at 3 bar(a). The amount of volatiles removed from the liquid stream in 1^{st} flash separator **(4)** is 89.7 wt.-%. Furthermore, 93.4 wt.-% of 1-butene is removed in the 1^{st} flash separator. In the 2^{nd} flash separator, an amount of 97.3 wt.-% of volatiles is removed, while 98.3 wt.-% of 1-butene is removed. Further details can be retrieved from Table 4.

**Table 4: Results of IE5**

| *Stream** | | **24** | **25** | **26** | **27** | **30** | **31** | **32** | **35** | **36** | **39** | **40** |
|---|---|---|---|---|---|---|---|---|---|---|---|---|
| total mass flow | kg/h | 2706 | 2706 | 1978 | 729 | 729 | 221 | 508 | 125 | 96 | 10 | 500 |
| temperature | °C | 181 | 215 | 166 | 166 | 250 | 231 | 231 | 61 | 64 | 249 | 249 |
| pressure | bar(a) | | | 21 | 21 | 56 | 3 | 3 | 2.5 | 18 | 0.02 | 0.02 |
| vapor fraction | % | 0 | 0 | 100 | 0 | 0 | 100 | 0 | 100 | 0 | 100 | 0 |
| ethylene | kg/h | 68 | 68 | 66 | 1.62 | 1.62 | 1.61 | 0.01 | 1.59 | 0.02 | 0.01 | 0.00 |
| 1-butene | kg/h | 133.2 | 133.2 | 124.3 | 8.8 | 8.8 | 8.7 | 0.15 | 7.52 | 1.17 | 0.15 | 0.00 |
| solvent** | kg/h | 1939 | 1939 | 1727 | 213 | 213 | 207 | 6 | 112 | 95 | 5.9 | 0.01 |
| iso-butenes | kg/h | 62.7 | 62.7 | 58.8 | 4.0 | 4.0 | 3.9 | 0.1 | 3.5 | 0.5 | 0.1 | 0.00 |
| hydrogen | g/h | 28 | 28 | 28 | 0.20 | 0.20 | 0.20 | 0.00 | 0.20 | 0.00 | 0.00 | 0.00 |
| methane | g/h | 43.4 | 43.4 | 42.8 | 0.7 | 0.7 | 0.7 | 0.0 | 0.6 | 0.00 | 0.00 | 0.00 |
| ethane | kg/h | 1.87 | 1.87 | 1.82 | 0.05 | 0.05 | 0.05 | 0.00 | 0.05 | 0.00 | 0.00 | 0.00 |
| polymer | kg/h | 502 | 502 | 0.0 | 502 | 502 | 0 | 501 | 0.00 | 0.00 | 1.87 | 500 |
| 1-butene | wt% | 4.9% | 4.9% | 6.3% | 1.2% | 1.2% | 3.9% | 0.0% | 6.0% | 1.2% | 1.5% | 0.0% |

| | | | | | | | | | | | | |
|---|---|---|---|---|---|---|---|---|---|---|---|---|
| * References refer to streams as denoted in Figure 1 ** Solvent is n-pentane | | | | | | | | | | | | |

## Claims

1. A process for the separation of at least one polyolefin from a product stream **(a)** from a solution polymerization process, wherein the product stream **(a)** comprises the at least one polyolefin and a mixture of volatiles, wherein the mixture of volatiles comprises at least one solvent, 1-butene and at least one olefin other than 1-butene, the process comprising the steps of:
- separating in a first separation step at a temperature, preferably flash temperature of lower than 250 °C and at a pressure of higher than 9 bar(a) the product stream **(a)** into a first 1-butene-rich vapor stream **(b)** and a first condensed polyolefin-rich stream **(c);**
- separating in a second separation step the first condensed polyolefin-rich stream **(c)** into a second 1-butene-rich vapor stream **(b')** and a second condensed polyolefin-rich stream **(c');**
- condensing in a first condensing step at least a part of the second 1-butene-rich vapor stream **(b')** into a condensed butene-lean recovery stream **(b*)** and a 1-butene-rich vapor recycle stream **(b**);**
**characterized in that**
the first 1-butene-rich vapor stream **(b)** and the 1-butene-rich vapor recycle stream **(b**)** are introduced into an initial feed stream **(a')** of the solution polymerization process without any further purification step.

2. The process according to claim 1, wherein the mass flow rate of the 1-butene-rich vapor recycle stream **(b**)** is less than 70% of the mass flow rate of the second 1-butene-rich vapor stream **(b'),** preferably is in the range of from 25 to 65%, and most preferably is in the range of from 33 to 63%.

3. The process according to claims 1 or 2, wherein subsequently of the second separation step and prior to the first condensing step no fractionating step is carried out.

4. The process according to any of the preceding claims 1 to 3, wherein in the first separation step the first 1-butene-rich vapor stream **(b)** is subjected to a fractionating step, wherein liquid and polymer entrained in the first 1-butene-rich vapor stream **(b)** are removed from the first 1-butene-rich vapor stream **(b)** and returned into the first separation step.

5. The process according to claim 4, wherein the fractionating step is carried out at a temperature of lower than 200 °C and at a pressure of higher than 9 bar(a).

6. The process according to any of the preceding claims 1 to 5, wherein the solvent is selected from the group consisting of C₄, C₅, C₆, C₇, C₈, C₉ and C₁₀ n-alkanes, iso-alkanes, cyclo-alkanes or mixtures thereof, preferably is selected from the group consisting of C₅, C₆, C₇, C₈, C₉ and C₁₀ n-alkanes, iso-alkanes, cyclo-alkanes and mixtures thereof, more preferably is selected from the group consisting of C₅, C₆, C₇, and C₈ n-alkanes, iso-alkanes, cyclo-alkanes and mixtures thereof, and most preferably is selected from the group consisting of C₅, C₆, and C₇ n-alkanes, iso-alkanes, cyclo-alkanes and mixtures thereof.

7. The process according to any of the preceding claims 1 to 6, wherein in the first separation step 60 to 95 wt.-% of the mixture of volatiles are removed from the product stream (a) with respect to the total weight of the mixture of volatiles in the product stream (a), preferably 70 to 94 wt.-%, more preferably 80 to 93 wt.-%, and most preferably 88.5 to 92 wt.-%.

8. The process according to any of the preceding claims 1 to 7, wherein the first separation step is a flash separation step.

9. The process according to claim 8, wherein the first separation step is carried out at a feed temperature in the range of from 185 to 240 °C and at a pressure of higher than 10 bar(a), preferably higher than 12 bar(a), and most preferably higher than 12.5 bar(a).

10. The process according to claims 8 or 9, wherein the first separation step is carried out at a temperature, preferably flash temperature, in the range of from 120 to less than 200 °C, preferably in the range of from 155 to 190 °C.

11. The process according to any of the preceding claims 1 to 10, wherein the second separation step is a flash separation step.

12. The process according to claim 11, wherein the second separation step is carried out at a feed temperature in the range of from 50 and 300 °C, more preferably in the range of from 175 and 275 °C, and most preferably in the range of from 200 and 250 °C, and at a pressure in the range of from 1 to 15 bar(a), more preferably in the range of from 1 to 12 bar(a), and most preferably in the range of from 1.5 to 10 bar(a).

13. The process according to any of the preceding claims 1 to 12, wherein the first condensing step is carried out at a temperature in the range of from 50 to 90 C, preferably in the range of from 55 to 85 °C, and most preferably in the range of from 60 to 80 °C.

14. The process according to any of the preceding claims 1 to 13, wherein the at least one polyolefin of product stream **(a)** is an olefin-butene copolymer, preferably an ethylene-butene copolymer, and wherein the process is carried out using a production plant suitable for solution polymerizing an olefin-octene copolymer, preferably an ethylene-octene copolymer.

15. A polyolefin obtainable by the process according to any of the preceding claims 1 to 14, wherein the polyolefin preferably comprises less than 500 wt.-ppm volatiles, more preferably less than 200 wt.-ppm volatiles, and most preferably equal to or less than 150 wt.-ppm volatiles.
